# EUROPÄISCHE PATENTSCHRIFT

(11) **EP 2 526 841 B1**
(45) Veröffentlichungstag und Bekanntmachung des Hinweises auf die Patenterteilung: **05.06.2013**
(21) Anmeldenummer: 12003911.0
(22) Anmeldetag: 18.05.2012
(51) Int. Cl.: A47J 31/54

(54) **Heizungsmodul für eine Heissgetränkemaschine oder einen Heissgetränkeautomaten**
Heating module for a hot drink machine or a hot drink device
Module de chauffage pour une machine de boissons chaudes ou un automate de boissons chaudes

(30) Priorität: 25.05.2011 DE 102011102431
(43) Veröffentlichungstag der Anmeldung: 28.11.2012
(73) Patentinhaber: Severin Elektrogeräte GmbH, 59846 Sundern (DE)
(72) Erfinder: Kroesen, Klaus, 46509 Xanten (DE)
(74) Vertreter: Köchling, Conrad-Joachim

(56) Entgegenhaltungen:
- EP-A1- 2 027 799
- WO-A1-2009/156190
- DE-A1-102009 006 577

## Beschreibung

Die Erfindung betrifft ein Heizungsmodul für eine Heißgetränkemaschine oder einen Heißgetränkeautomaten, insbesondere einen Kaffeevollautomat, zumindest umfassend eine Pumpe zur Förderung des Wassers, eine Heizung zur Erwärmung des Wassers und ein Leitungssystem zum Verbinden der Pumpe und der Heizung mit einer Frischwasserzufuhr einerseits und einem Heißwasserauslass andererseits.

Derartige Heizungsmodule dienen zur Erhitzung von aus einem Vorratsbehälter oder einer Zuleitung zugeführtem Frischwasser, um ein Heißgetränk wie beispielsweise Kaffee, Tee oder dergleichen zuzubereiten.

Die gemeinsame Anordnung der Pumpe und der Heizung auf einem Modulträger ermöglicht dabei eine platzsparende und im Bedarfsfall schnell austauschbare Anordnung von Pumpe und Heizung innerhalb der Heißgetränkemaschine beziehungsweise des Heißgetränkeautomaten.

Im Stand der Technik ist beispielsweise aus der DE 10 2009 006 577 A1 ein Heizsystem mit einer Heizeinheit und einer integrierten Pumpe bekannt. Hierbei ist das Pumpengehäuse mindestens zweiteilig ausgebildet, wobei ein Teil des Pumpengehäuses gleichzeitig ein Verbindungsteil zum Verbinden der Heizeinheit mit der Pumpe bildet. Dabei weist das Pumpengehäuse mindestens eine Pumpwasserzufuhr und eine Pumpwasserabfuhr auf.

Weiter ist aus der DE 37 09 256 A1 eine elektrisch betriebene Maschine zum Zubereiten von Heißgetränken, wie Kaffee, Tee oder dergleichen bekannt, bei der der Frischwasserbehälter, die Heizung und das Steigrohr zu einer Baueinheit zusammengefügt sind.

Aufgrund des eingangs genannten Standes der Technik liegt der vorliegenden Erfindung die Aufgabe zugrunde, ein Heizungsmodul der eingangs genannten Art zu schaffen, das eine sehr platzsparende Anordnung der Komponenten bei gleichzeitig funktionstechnisch optimaler Positionierung ermöglicht. Des Weiteren liegt der Erfindung die Aufgabe zugrunde, die Anzahl der erforderlichen Verbindungsleitungen innerhalb der Heißgetränkemaschine oder des Heißgetränkeautomaten auf ein Minimum zu reduzieren, und dabei ein schnelles und einfaches Auswechseln des gesamten Moduls zu ermöglichen.

Zur Lösung dieser Aufgabe schlägt die Erfindung vor, dass das Heizungsmodul aus zwei zu einer kassettenartigen Einheit zusammensetzbaren Halbschalen besteht, die in einer zusammengesetzten Lage einen ersten Hohlraum für ein Heizelement, und einen zweiten Hohlraum als Fluidkammer oder -kanal aufweisen, wobei die Pumpe eingangsseitig an die Frischwasserzufuhr und ausgangsseitig mit einem Eingang des ersten Hohlraumes verbunden ist, wobei der erste Hohlraum einen ersten Ausgang aufweist, der einen Auslauf für erhitztes Wasser bildet, und nahe des ersten Ausgangs einen zweiten Ausgang aufweist, der durch ein Ventil gesteuert mit einem Einlass des zweiten Hohlraumes verbunden ist, wobei der zweite Hohlraum einen Auslass zur Abgabe durch das Ventil zugeführten, überschüssigen Wassers oder Kondensat aufweist.

Bevorzugt ist vorgesehen, dass die zusammensetzbaren Halbschalen in der zusammengesetzten Lage einen dritten Hohlraum als Frischwasserzulaufkammer aufweisen, wobei die Pumpe eingangsseitig mit einem Ausgang des dritten Hohlraumes und ausgangsseitig mit dem Eingang des ersten Hohlraumes verbunden ist, wobei der dritte Hohlraum den Einlass zur Frischwasserzufuhr aufweist.

Ein derartiges Heizungsmodul weist alle wichtigen Komponenten zur Förderung und Beheizung von zugeführtem Frischwasser innerhalb einer Heißgetränkemaschine oder eines Heißgetränkeautomaten auf. Dabei ist eine drastische Verminderung der erforderlichen Verbindungsleitungen erreicht, da das Leitungssystem Bestandteil des Heizungsmoduls ist. Somit sinkt beim Zusammenbau einer entsprechenden Heißgetränkemaschine oder eines entsprechenden Heißgetränkeautomaten die Fehlerrate durch den Entfall von manuell zu erstellenden Verbindungen deutlich. Ein derartiges erfindungsgemäßes Heizungsmodul kann separat vormontiert und funktionsgetestet werden. Im Servicefall ist es als Baugruppe schnell und einfach auswechselbar. Hierdurch sind die Servicekosten gegenüber herkömmlichen Lösungen deutlich verringert. Auch ist die Anzahl möglicher Leckstellen vermindert.

Bei der Montage eines derartigen Heizungsmodules innerhalb einer Heißgetränkemaschine oder eines Heißgetränkeautomaten muss das Heizungsmodul lediglich mit dem Frischwasseranschluss, dem Heißwasseranschluss, einem Auffangbehälter oder dergleichen für überschüssiges Wasser oder Kondensat verbunden werden und eine elektrische Verbindung mit weiteren elektrischen Bauteilen der Heißgetränkemaschine oder des Heißgetränkeautomaten hergestellt werden.

Das gesamte Leitungssystem von der Frischwasserzufuhr bis zur Heißwasserabgabe beziehungsweise der Abgabe von überschüssigem Heißwasser oder Kondensat ist Bestandteil des Heizungsmoduls, wodurch einerseits die Fehlerrate bei der Montage sinkt und andererseits ein Auswechseln des gesamten Heizungsmoduls schnell und einfach ermöglicht ist. Auch ist hierdurch eine platzsparende Anordnung aller wichtigen Komponenten bei gleichzeitig funktionstechnisch optimaler Positionierung ermöglicht.

Bevorzugt ist vorgesehen, dass die Pumpe auf der Außenseite der ersten Halbschale angeordnet oder befestigt ist.

Insbesondere kann besonders bevorzugt vorgesehen sein, dass der zweite Hohlraum eine Expansions- und /oder Kondensationskammer bildet.

Eine derartige Expansions- und/oder Kondensationskammer dient zum sicheren Auffangen von überschüssigem Heißwasser einerseits und als Druckentlastung nach erfolgter Heißwasserabgabe andererseits. Hierdurch ist ein gezieltes Abgeben von überschüssigem Druck in eine dafür vorgesehene Auffangkammer ermöglicht, so dass beispielsweise ein Verschmutzen von weiteren Teilen innerhalb der Getränkemaschine oder des Heißgetränkeautomaten verhindert ist. Das aufgefangene Wasser beziehungsweise aufgefangener Wasserdampf als Kondensat wird beispielsweise durch eine Schlauchverbindung gezielt in ein dafür vorgesehenes Behältnis oder in eine dafür vorgesehene Abführleitung abgegeben.

Weiter kann besonders bevorzugt vorgesehen sein, dass die kassettenartigen Halbschalen des Heizungsmoduls eine quaderartige Form aufweisen und alle Hohlräume etwa parallel zu den Längsseiten verlaufend angeordnet sind, wobei die Einlässe der Hohlräume nahe einer ersten Querseite und die Auslässe nahe der jeweils gegenüberliegenden Querseite der Rechteckform angeordnet sind.

Durch eine derartige quaderartige Form ist ein schnelles und einfaches Verbinden der beiden Halbschalen ermöglicht, da diese beim Zusammenbau lediglich deckungsgleich aufeinandergelegt werden müssen. Dabei bildet eine Außenseite einer Halbschale den Träger für die Komponenten, wie beispielsweise die Pumpe, die Steuerelektronik, das Leitungssystem und gegebenenfalls weitere Komponenten.

Zudem kann besonders bevorzugt vorgesehen sein, dass nahe am oder innerhalb des dritten Hohlraumes, vorzugsweise in einer nahe des Eingangs des dritten Hohlraumes angeordneten Kammer, ein Durchflussmengenmesser angeordnet ist.

Insbesondere kann dabei besonders bevorzugt vorgesehen sein, dass der Durchflussmengenmesser durch einen Ultraschall-Durchflussmengenmesser oder einen Drucksensor-Durchflussmengenmesser gebildet ist.

Sowohl ein Ultraschall- als auch ein Drucksensor-Durchflussmengenmesser stellen besonders präzise und langlebige Lösungen zur Messung der durchgeflossenen Menge an Frischwasser dar.

Auch kann ein Durchflussmengenmesser an anderer Stelle in den Frischwasserzulauf integriert werden, zum Beispiel vor oder nach der Pumpe.

Auch kann besonders bevorzugt vorgesehen sein, dass an oder auf der ersten kassettenartigen Halbschale eine Platine mit einer Auswerte- und Ansteuerungselektronik zur Steuerung und/oder Auswertung von elektrischen Signalen zumindest der Pumpe und/oder Heizung angeordnet ist.

Dabei kann besonders bevorzugt vorgesehen sein, dass die Platine auf einem Kühlkörper angeordnet ist, der von der ersten kassettenartigen Halbschale nach außen abragt und mit einem Teilbereich die Wandung der ersten kassettenartigen Halbschale durchgreift und innerhalb des dritten Hohlraumes liegt und dort vom Frischwasser umströmbar ist.

Die Platine mit der darauf oder daran angeordneten Auswerte- und Ansteuerungselektronik zur Steuerung und/oder Auswertung von elektrischen Signalen ist dabei mit allen wesentlichen Komponenten von der Frischwasserzufuhr bis hin zur Heißwasserabgabe und der Abgabe von überschüssigem Heißwasser beziehungsweise Heißwasserdampf verbunden. Der die erste kassettenartige Halbschale durchgreifende Kühlkörper, auf dem die Platine angeordnet ist, wird beim Wasserfluss, also beim Gebrauch der Heißgetränkemaschine oder des Heißgetränkeautomaten von Frischwasser umströmt und gekühlt. Hierdurch kann auf der Platine entstehende Wärme durch den Kühlkörper an das zugeführte Frischwasser abgegeben werden, so dass eine Überhitzung der Platine, beispielsweise bei häufigem Gebrauch, weitestgehend verhindert ist.

Darüber hinaus kann besonders bevorzugt vorgesehen sein, dass die Pumpe zur Förderung des Wassers durch eine Schwingkolbenpumpe oder eine Rotationskolbenpumpe, gegebenenfalls mit daran oder darin angeordnetem Druckspeicher zur Kompensation von Druckspitzen, gebildet ist. Derartige Pumpen haben sich als besonders langlebig und dabei nur wenig Geräusche erzeugende Lösung bewährt, wobei insbesondere ein darin oder daran angeordneter Druckspeicher zur Kompensation von Druckspitzen einen geräuscharmen Betrieb ermöglicht.

Weiterhin kann besonders bevorzugt vorgesehen sein, dass das Heizelement aus einem von Frischwasser durchströmten oder umströmten induktiv erhitztem Element, Rohrheizkörper, Infrarotstrahler oder einer Heizpatrone besteht.

Derartige Heizkörper sind in ihrer Form an die Form des ersten Hohlraumes angepasst und stellen dabei eine an sich bewährte, langlebige und kostengünstige Lösung zur Erhitzung von Frischwasser dar.

Zudem kann besonders bevorzugt vorgesehen sein, dass die Pumpe mit einem ersten Schlauchabschnitt eingangsseitig mit dem Ausgang des dritten Hohlraumes und ausgangsseitig mittels eines zweiten Schlauchabschnitts mit dem Eingang des ersten Hohlraumes verbunden ist.

Auch eine derartige vormontierte Verbindung zwischen dem Ausgang des dritten Hohlraumes und dem Eingang der Pumpe vermindert die Fehlerrate bei der Montage der Heißgetränkemaschine beziehungsweise des Heißgetränkeautomaten.

Weiterhin kann besonders bevorzugt vorgesehen sein, dass zwischen Pumpenausgang und Heizungseingang ein Überdruckventil eingeschaltet ist, das einen Abführanschluss aufweist, der beispielsweise mittels eines weiteren Schlauchabschnitts mit einem Auffangbehälter verbunden ist.

Durch ein derart angeordnetes Überdruckventil können Beschädigungen der Pumpe, beispielsweise bei durch Dauerbetrieb entstandenem Überdruck weitestgehend vermieden werden, so dass die Lebensdauer dieser Komponenten erhöht ist. Der Abführanschluss kann dabei mittelbar durch einen weiteren Schlauchabschnitt aus der Heißgetränkemaschine oder dem Heißgetränkeautomaten herausgeführt oder mit einem Auffangbehälter innerhalb der Maschine verbunden sein.

Darüber hinaus kann besonders bevorzugt vorgesehen sein, dass im Verlauf des Wasserflusses, insbesondere am Heizungseingang, mindestens ein Temperatursensor zur Erfassung der Frischwassertemperatur und am Heizungsausgang ein Temperatursensor zur Erfassung der Heißwassertemperatur angeordnet ist.

Die Temperatursensoren sind dabei mit der auf der Platine angeordneten Auswerte- und Ansteuerungselektronik verbunden, so dass erfasste Werte jederzeit ausgewertet werden können, um eine gewünschte Heißwasserabgabetemperatur aus dem Heißwasserauslauf sicherzustellen. Dabei kann die Auswerte- und Ansteuerungselektronik durch die abgegriffenen Werte die Steuerung der Pumpe und somit die Durchflussgeschwindigkeit und gegebenenfalls die Heizleistung der Heizung beeinflussen, um eine exakte, vorgegebene Temperatur am Heißwasserauslass zu erzielen.

Auch kann besonders bevorzugt vorgesehen sein, dass das Ventil zwischen dem Eingang des zweiten Hohlraumes und dem zweiten Ausgang des ersten Hohlraumes elektronisch steuerbar ist, wobei die Steuerung durch die auf der Platine angeordnete Steuerungs- und Auswerteelektronik nach Beendigung der Getränkeerzeugung erfolgt.

Die Öffnung dieses Ventils erfolgt durch die Steuerungs- und Auswerteelektronik nach Beendigung der Getränkeerzeugung, um einerseits eine unerwünschte weitere Abgabe von restlichem Heißwasser durch die Heißwasserausgabe zu verhindern, und andererseits um dort im System vorhandenen Druck gezielt in den als Expansions- oder Kondensationskammer ausgebildeten zweiten Hohlraum abzuführen und dort gegebenenfalls zu kondensieren und anschließend entspannt in ein dafür vorgesehenes Behältnis oder aus der Heißgetränkemaschine beziehungsweise dem Heißgetränkeautomaten heraus abzuführen.

Weiterhin kann besonders bevorzugt vorgesehen sein, dass die quaderartigen Halbschalen druckdicht miteinander verbunden oder verbindbar sind, beispielsweise mittels Verkleben, Verschweißen, insbesondere Reibverschweißen, oder Verschrauben, wobei beim Verschrauben ein Dichtmittel zwischen den Halbschalen angeordnet ist.

Auch kann besonders bevorzugt vorgesehen sein, dass die Hohlräume durch an einer oder an beiden Halbschalen deckungsgleiche Vertiefungen oder Ausnehmungen gebildet sind, wobei die Hohlräume nach dem Verbinden der Halbschalen fluiddicht sind.

Durch das druckdichte und gleichzeitig fluiddichte Verbinden der beiden Halbschalen werden durch die jeweils deckungsgleichen Vertiefungen an den Halbschalen die Hohlräume gebildet. Diese sind sowohl einander gegenüber als auch gegenüber der äußeren Umgebung sowohl druck- als auch fluiddicht abgedichtet. Ein Zulauf beziehungsweise eine Abgabe von Frischwasser/Heißwasser in jeden Hohlraum hinein beziehungsweise aus jedem Hohlraum heraus erfolgt lediglich durch die dafür vorgesehenen Zuleitungen beziehungsweise Abführungen.

Schließlich kann besonders bevorzugt vorgesehen sein, dass das in dem ersten Hohlraum angeordnete Heizelement am jeweiligen stirnseitigen Ende Anschlusselemente aufweist, die gegenüber dem ersten Hohlraum abgedichtet aus dem Hohlraum heraus die Halbschalen nach außen durchgreifen.

Hierdurch ist ein Verbinden mit einer innerhalb des Gehäuses der Heißgetränkemaschine beziehungsweise des Heißgetränkeautomaten angeordneten Stromversorgung für das Heizelement ermöglicht. Die Anschlusselemente können dabei durch einfache Steckverbinder gebildet sein, so dass ein schnelles und einfaches Entfernen und auch Wiedereinsetzen eines erfindungsgemäßen Heizungsmoduls innerhalb des Gehäuses der Heißgetränkemaschine beziehungsweise des Heißgetränkeautomaten ermöglicht ist.

Ausführungsbeispiele der Erfindung sind in den Figuren dargestellt und im Folgenden näher beschrieben.

Es zeigt:
- Figur 1: ein erfindungsgemäßes Heizungsmodul von schräg oben gesehen mit daran angeordneten Schlauchverbindungen;
- Figur 2: desgleichen ohne Schlauchverbindungen;
- Figur 3: das Ausführungsbeispiel aus Figur 1 in Seitenansicht;
- Figur 4: ein Ausführungsbeispiel der Erfindung in Explosionsdarstellung von schräg oben gesehen;
- Figur 5: zwei erfindungsgemäße Halbschalen von hinten schräg oben gesehen in einer Vormontagelage.
- Figur 6: eine vereinfachte Ausführungsform der Erfindung in der Ansicht analog Figur 1 gesehen;
- Figur 7: desgleichen in der Ansicht analog Figur 3 gesehen;
- Figur 8: die Ausführungsvariante in einer Ansicht analog Figur 4 gesehen;
- Figur 9: die Variante in einer Ansicht analog Figur 5 gesehen.

In den Figuren ist ein Heizungsmodul 1 für eine Heißgetränkemaschine oder einen Heißgetränkeautomaten gezeigt. Insbesondere findet ein derartiges Heizungsmodul 1 Verwendung in einem Kaffeevollautomaten. Das Heizungsmodul 1 umfasst eine Pumpe 2 zur Förderung des Wassers, eine Heizung 3 zur Erwärmung des Wassers und ein Leitungssystem zum Verbinden der Pumpe 2 und der Heizung 3 mit einer Frischwasserzufuhr 4 einerseits und einem Heißwasserauslass 5 andererseits.

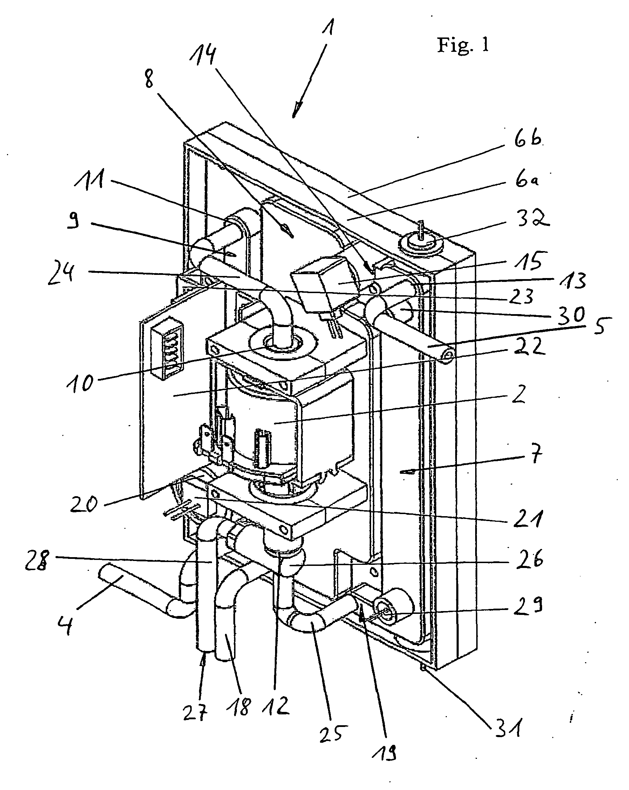

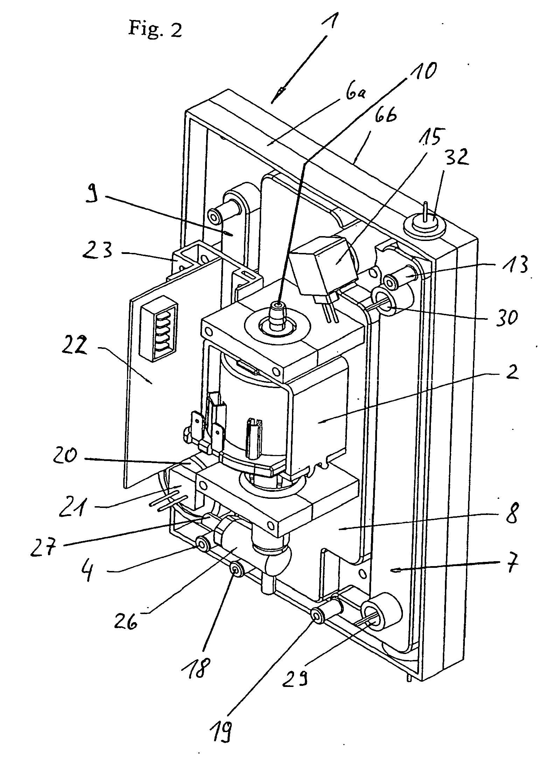

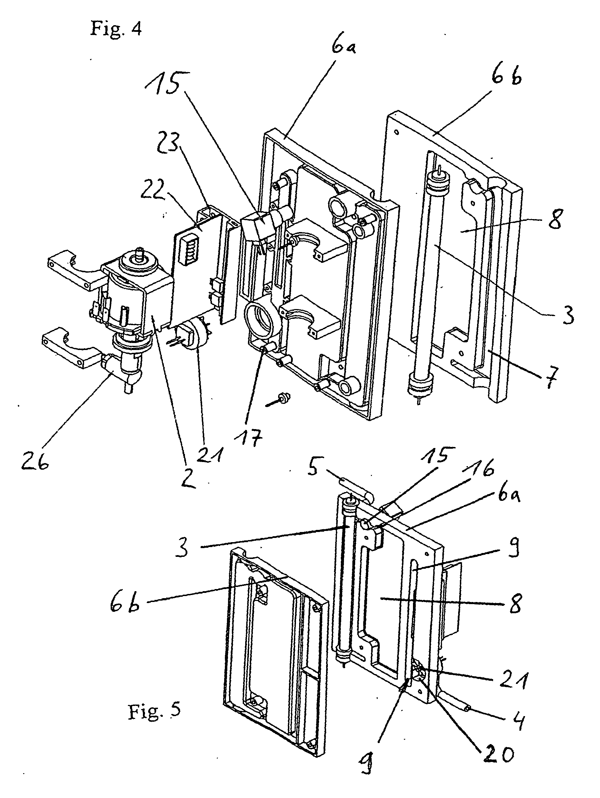

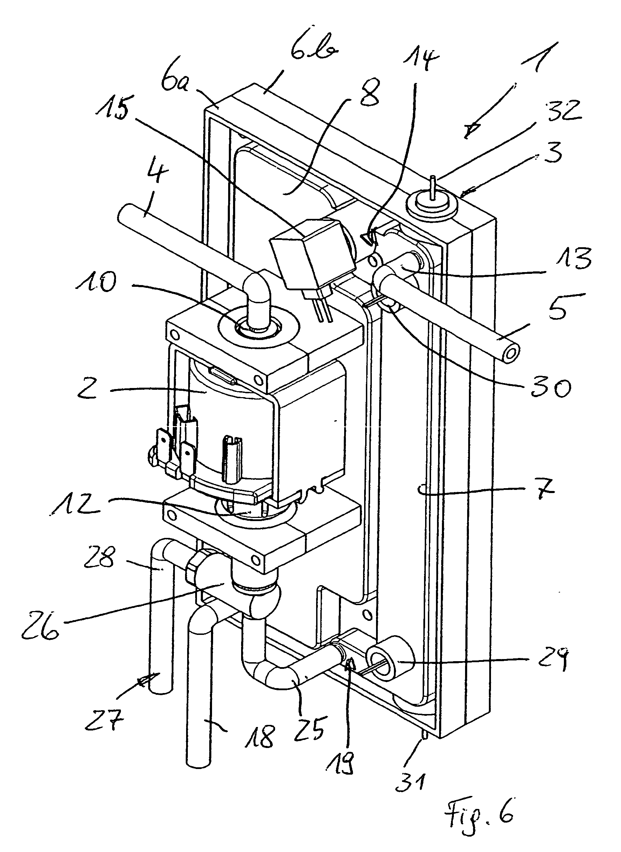

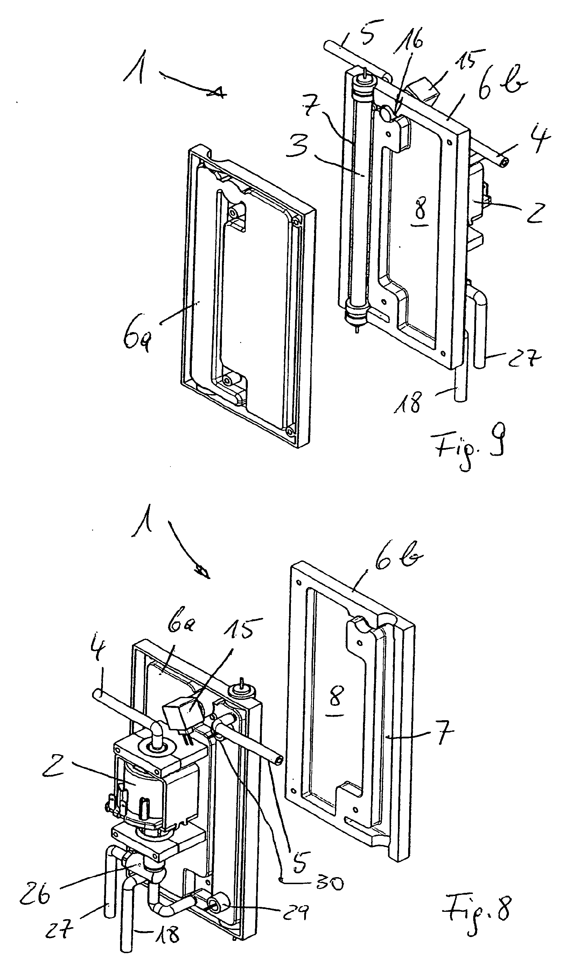

Erfindungsgemäß besteht das Heizungsmodul 1 aus zwei zu einer Einheit zusammensetzbaren, flachen kassettenartigen Halbschalen 6a, 6b aus Kunststoff. Die kassettenartigen Halbschalen 6a, 6b weisen in einer zusammengesetzten Lage (siehe Figur 1 bis 3 sowie Figur 6 und 7) einen ersten Hohlraum 7 für ein Heizelement 3 und einen zweiten Hohlraum 8 als Fluidkammer auf. Bei der Ausführungsform gemäß Figur 1 bis 5 ist zusätzlich noch ein dritter Hohlraum 9 als Frischwasserzulaufkammer vorgesehen. Bei der Ausführungsform nach Figur 6 bis 9 ist der Frischwasserzulauf 4 direkt an den Eingang der Pumpe 2 angeschlossen. Bei allen Ausführungsformen ist auf der Außenseite der ersten Halbschale 6a die Pumpe 2 angeordnet oder befestigt. Bei der Ausführungsform nach Figur 1 bis 5 ist die Pumpe eingangsseitig (bei 10) mit einem Ausgang 11 des dritten Hohlraumes 9 und ausgangsseitig (bei 12) mit einem Eingang 19 des ersten Hohlraumes 7 verbunden. Auch bei der Ausführungsform nach Figur 6 bis 9 ist die Pumpe 2 ausgangsseitig (bei 12) mit dem Eingang 19 des ersten Hohlraumes 7 verbunden. Der erste Hohlraum 7 weist einen ersten Ausgang 13 auf, der den Auslauf 5 für erhitztes Wasser bildet. Nahe des ersten Ausgangs 13 weist der erste Hohlraum 7 einen zweiten Ausgang 14 auf, der durch ein Ventil 15 gesteuert mit einem Einlass 16 des zweiten Hohlraumes 8 verbunden ist. Bei der Ausführungsform nach Figur 1 bis 5 weist der dritte Hohlraum 9 einen Einlass 17 für die Frischwasserzufuhr 4 auf. Bei allen Ausführungsformen weist der zweite Hohlraum 8 einen Auslass 18 zur Abgabe von durch das Ventil 15 zugeführtem, überschüssigem Wasser oder Kondensat auf. Der zweite Hohlraum 8 ist dabei als Expansions- und Kondensationskammer ausgebildet. Die kassettenartigen Halbschalen 6a,6b des Heizungsmoduls 1 weisen, wie aus den Figuren ersichtlich ist, vorzugsweise eine quaderförmige Gestaltung auf. Dabei sind alle Hohlräume 7,8,9 etwa parallel zu den Längsseiten der Quaderform verlaufend angeordnet und die Einlässe 16,17,19 der Hohlräume 7,8,9 nahe einer ersten Querseite und die Auslässe 11,13,14,18 nahe der jeweils gegenüberliegenden Querseite der Rechteckform angeordnet. Durch entsprechende Anordnung kann eine sehr effektive Verteilung der Hohlräume 7,8,9 und der an oder nahe der Hohlräume 7,8,9 angeordneten Elemente erfolgen. Bei der Ausführungsform gemäß Figur 1 bis 5 ist nahe des dritten Hohlraumes 9, der mit der Frischwasserzufuhr 4 verbunden ist, ein Durchflussmengenmesser 21 angeordnet. Im Ausführungsbeispiel ist der

Durchflussmengenmesser 21 in einer nahe des Eingangs 17 des dritten Hohlraumes 9 angeordneten Kammer 20 angeordnet. Hierdurch ist eine exakte Mengenerfassung des zugeführten Frischwassers ermöglicht. Im Ausführungsbeispiel ist der Durchflussmengenmesser 21 durch einen Ultraschall- Durchflussmengenmesser gebildet. Alternativ kann der Durchflussmengenmesser 21 auch durch einen Drucksensor-Durchflussmengenmesser gebildet sein. Auch andere Ausführungsformen sind möglich.

Auf der ersten kassettenartigen Halbschale 6a ist eine Platine 22 mit einer Auswerte- und Ansteuerungselektronik zur Steuerung und/oder Auswertung von elektrischen Signalen der Pumpe 2 und/oder der Heizung 3 angeordnet. Die Auswerteelektronik kann auch die erfassten Daten weiterer Komponenten des Heizungsmoduls 1 auswerten und/oder steuern. Die Platine 22 ist auf einem Kühlkörper 23 angeordnet, der von der ersten kassettenartigen Halbschale 6a nach außen abragt und mit einem Teilbereich die Wandung der ersten kassettenartigen Halbschale 6a durchgreift und innerhalb des dritten Hohlraumes 9 liegt und dort vom Frischwasser umströmt beziehungsweise umströmbar ist. Während des Betriebes der Heißgetränkemaschine beziehungsweise des Heißgetränkeautomaten umströmt zugeführtes Frischwasser die Teile des Kühlkörpers 23, die die Wandung durchgreifen und nimmt somit vom Kühlkörper 23 an das Frischwasser abgegebene Wärme auf. Hierdurch ist einerseits das Frischwasser geringfügig vorgewärmt, und andererseits die auf der Platine 22 entstehende Wärme durch den Kühlkörper 23 abgeführt. Somit ist eine Überhitzung der Platine 22 wirksam verhindert.

Die Pumpe 2 zur Förderung des Wassers ist im Ausführungsbeispiel durch eine Schwingkolbenpumpe mit daran angeordnetem Druckspeicher zur Kompensation von Druckspitzen gebildet. Alternativ kann die Pumpe 2 auch durch eine Rotationskolbenpumpe mit oder ohne Druckspeicher gebildet sein.

Das Heizelement 3 ist innerhalb des ersten Hohlraumes 7 angeordnet und durch einen Rohrheizkörper, der von Frischwasser umströmt wird, gebildet. Alternativ und im Ausführungsbeispiel nicht gezeigt, kann das Heizelement 3 auch durch ein Induktionsheizelement oder eine Heizpatrone gebildet sein.

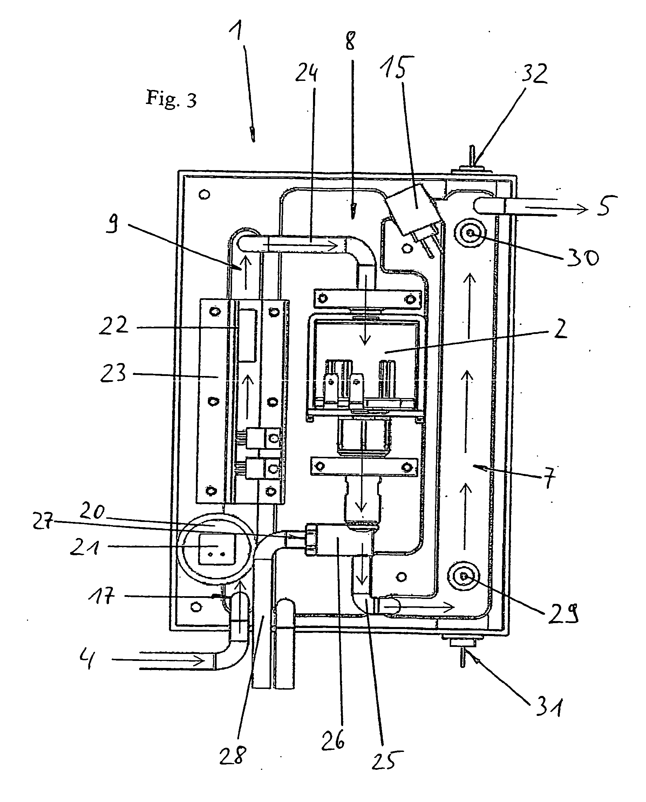

Die Pumpe 2 ist wie insbesondere aus Figur 1 und Figur 3 ersichtlich mit einem ersten Schlauchabschnitt 24 eingangsseitig (bei 10) mit dem Ausgang 11 des dritten Hohlraumes 9 und ausgangsseitig (bei 12) mittels eines zweiten Schlauchabschnitts 25 mit dem Eingang 19 des ersten Hohlraumes 7 verbunden. Hierdurch sind mögliche Fehler beim Zusammenbau der Heißgetränkemaschine beziehungsweise des Heißgetränkeautomaten weitestgehend verhindert, da ein derartiges Heizungsmodul 1 üblicherweise vorgefertigt und funktionsgeprüft wird und anschließend in die Heißgetränkemaschine beziehungsweise den Heißgetränkeautomaten eingebaut wird.

Zwischen Pumpenausgang 12 und Heizungseingang (bei 19) ist ein Überdruckventil 26 eingeschaltet, dass einen Abführanschluss 27 aufweist, der im Ausführungsbeispiel mittels eines weiteren Schlauchabschnitts 28 mit einem Auffangbehälter innerhalb der Heißgetränkemaschine beziehungsweise des Heißgetränkeautomaten verbunden ist. Hierdurch ist insbesondere bei der Verwendung von Pumpen 2 ohne Druckspeicher zur Kompensation von Druckspitzen eine Beschädigung der Pumpe 2 oder des Leitungssystems vermieden, da durch das Überdruckventil ein unerwünschter Überdruck gezielt abgeführt werden kann.

Zur Erfassung der Temperaturen sowohl vor als auch nach der Erwärmung durch die Heizung 3 sind im Verlauf des Wasserflusses, im Ausführungsbeispiel am Heizungseingang (bei 17) ein erster Temperatursensor 29 zur Erfassung der Frischwassertemperatur und am Heizungsausgang (bei 13) ein zweiter Temperatursensor 30 zur Erfassung der Heißwassertemperatur angeordnet. Die Temperatursensoren 29, 30 sind mit der Auswerte- und Ansteuerungselektronik auf der Platine 22 verbunden und steuerbar. Die Auswerte- und Ansteuerungselektronik kann nach Erfassung der Temperaturen durch die Temperatursensoren 29, 30 beispielsweise die Durchlaufgeschwindigkeit der Pumpe 2 oder die Heizleistung der Heizung 3 steuern, um eine gewünschte Temperatur am Heißwasserauslauf zu erzielen.

Das Ventil 15 zwischen dem Eingang 16 des zweiten Hohlraumes 8 und dem zweiten Ausgang 14 des ersten Hohlraumes 7 ist mit der Auswerte- und Ansteuerungselektronik auf der Platine 22 verbunden und durch diese steuerbar. Die Steuerung beziehungsweise Öffnung des Ventiles 15 ermöglicht die Abgabe von überschüssigem Heißwasser beziehungsweise Heißdampf nahe des Heißwasserauslasses 5, wodurch einerseits ein mögliches Nachtropfen nach erfolgter Getränkeabgabe und andererseits eine Beschädigung der entsprechenden Komponenten vermieden ist. Zudem ist hierdurch ein gezieltes Entspannen von unter Druck stehendem Heißwasser beziehungsweise Heißwasserdampf in den zweiten Hohlraum 8 hinein, der als Expansions- und Kondensationskammer ausgebildet ist, ermöglicht.

Die quaderförmigen Halbschalen 6a, 6b sind in der Zusammenbaulage druckdicht miteinander verbunden. Das Verbinden kann beispielsweise mittels Verkleben, Verschweißen, dabei insbesondere mittels Reibverschweißen, oder Verschrauben erfolgen. Beim Verschrauben ist zwischen den Halbschalen 6a, 6b ein weiteres Dichtmittel, beispielsweise in Form einer Flachdichtung angeordnet. Im Ausführungsbeispiel sind die Halbschalen 6a, 6b mittels Reibverschweißen druckdicht und fluiddicht miteinander verbunden.

Die Hohlräume 7,8,9 sind durch an einer oder an beiden Halbschalen 6a, 6b ausgebildete Vertiefungen gebildet. Im Ausführungsbeispiel sind der erste Hohlraum 7 und der zweite Hohlraum 8 durch deckungsgleiche Vertiefungen an den Halbschalen 6a, 6b gebildet. Nach dem Verbinden der Halbschalen 6a, 6b bilden die Vertiefungen die fluid- und druckdichten Hohlräume 7,8,9.

Das in dem ersten Hohlraum 7 angeordnete Heizelement 3 weist an je einem stirnseitigen Ende Anschlusselemente 31, 32 auf. Die Anschlusselemente 31, 32 sind gegenüber dem ersten Hohlraum 7 abgedichtet aus dem Hohlraum 7 heraus, die Halbschalen 6a, 6b nach außen durchgreifend, angeordnet. Hierdurch ist beim Einbau des Heizungsmoduls 1 in ein Gehäuse einer entsprechenden Heißgetränkemaschine beziehungsweise eines entsprechenden Heißgetränkeautomaten eine schnelle und einfache Verbindung mit entsprechenden elektrischen Anschlusselementen innerhalb des Gehäuses ermöglicht.

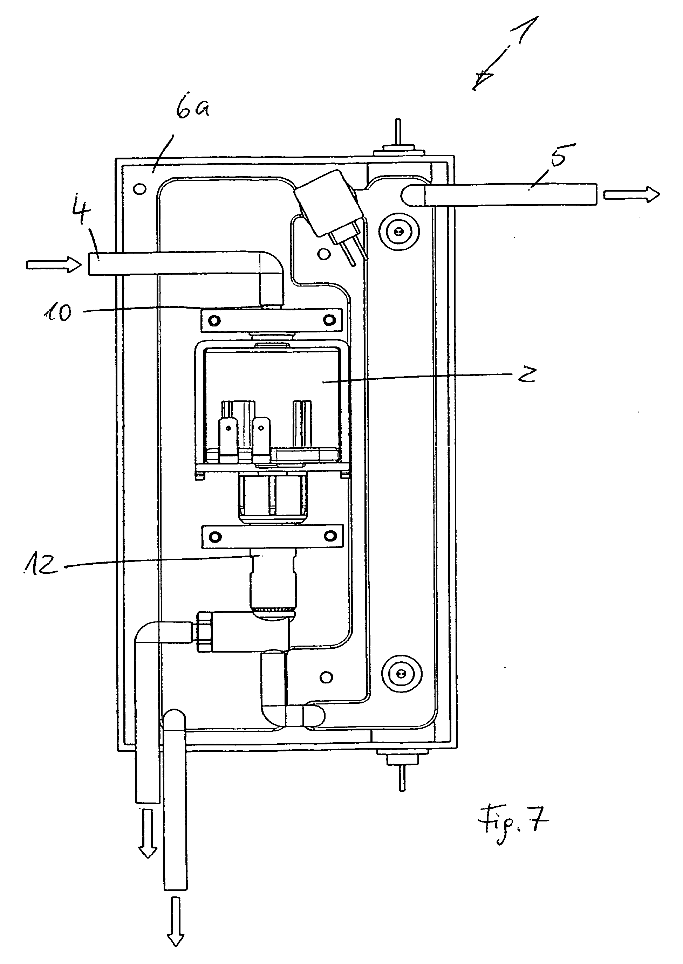

Ein entsprechender Wasserfluss durch ein erfindungsgemäßes Heizungsmodul 1 hindurch ist in Figur 3 durch entsprechende Pfeile verdeutlicht und auch in Figur 7 durch Pfeile dargestellt. Die Funktion wird im Folgenden näher erläutert.

Ein Unterschied zwischen den Ausführungsformen besteht darin, dass bei der Ausführungsform nach Figur 6 bis 9 das Heizungsmodul 1 so mit der Frischwasserzufuhr 4 verbunden wird, dass diese direkt an den Eingang der Pumpe 2 angeschlossen wird. Demgegenüber wird bei der Ausführungsform nach Figur 1 bis 5 Frischwasser über den Frischwasseranschluss 4 im entsprechenden Bereich des dritten Hohlraumes 9 zugeführt. Anschließend wird die Menge des zugeführten Frischwassers durch den Durchflussmengenmesser 21 gemessen und der Wert zu der auf der Platine 22 vorgesehenen Auswert- und Ansteuerungselektronik übermittelt. Nach Durchfließen des dritten Hohlraumes 9 in Pfeilrichtung fließt das Frischwasser durch einen ersten Schlauchabschnitt 24 in die Pumpe 2. Bei der Ausführungsform nach Figur 6 bis 9 ist dieser erste Schlauchabschnitt 24 direkt an den Frischwasseranschluss 4 angeschlossen.

Nach Verlassen der Pumpe 2 gelangt das Frischwasser in ein Überdruckventil 26, welches einen Abführanschluss 27 aufweist, der mittels eines Schlauchabschnittes 28 im Falle eines ungeplanten Betriebsüberdruckes das Wasser beispielsweise in einen Auffangbehälter abführen kann. Das Überdruckventil 26 ist mit einem zweiten Schlauchabschnitt 25 mit dem Eingang des ersten Hohlraumes 7, in dem das Heizelement 3 angeordnet ist, verbunden. Bei ordnungsgemäßem Druck innerhalb des Systems erfolgt die Weiterleitung des Frischwassers zum Eingang der Heizung 3. Am oder nahe des

Eingangs der Heizung 3 ist ein erster Temperatursensor 29 zur Erfassung der heizungseingangsseitigen Temperatur angeordnet. Nach Durchlaufen und Erwärmen der Heizung 3 ist ausgangsseitig der Heizung 3 ein zweiter Temperatursensor 30 angeordnet, der die abzugebende Wassertemperatur misst. Die durch die Temperatursensoren 29, 30 erfassten Temperaturen werden von der auf der Platine 22 angeordneten Auswerte- und Ansteuerungselektronik erfasst und entsprechend bewertet, um beispielsweise die Durchflussgeschwindigkeit der Pumpe 2 oder die Heizleistung der Heizung 3 entsprechend zu steuern, so dass eine vorgewünschte Solltemperatur am Heißwasserauslass 5 erzielt ist.

Die Erfindung ist nicht auf das Ausführungsbeispiel beschränkt, sondern im Rahmen der Ansprüche vielfach variabel.

### Bezugszeichenliste:

- 1: Heizungsmodul
- 2: Pumpe
- 3: Heizung
- 4: Frischwasserzufuhr
- 5: Heißwasserauslass
- 6: a,b,c Halbschalen
- 7: erster Hohlraum für Heizung
- 8: zweiter Hohlraum als Fluidkammer
- 9: dritter Hohlraum Frischwasserzulauf
- 10: Eingang Pumpe 2
- 11: Ausgang des dritten Hohlraumes 9
- 12: Ausgang Pumpe
- 13: erster Ausgang von 7
- 14: zweiter Ausgang von 7
- 15: Ventil
- 16: Einlass des zweiten Hohlraumes 8
- 17: Einlass von 9 für Frischwasser
- 18: Auslass von 8
- 19: Eingang des ersten Hohlraumes 7
- 20: Kammer
- 21: Durchflussmengenmesser
- 22: Platine
- 23: Kühlkörper
- 24: Schlauchabschnitt
- 25: Schlauchabschnitt
- 26: Überdruckventil
- 27: Abführanschluss
- 28: Schlauchabschnitt
- 29: erster Temperatursensor
- 30: zweiter Temperatursensor
- 31: Anschlusselement von 3
- 32: Anschlusselement von 3

## Patentansprüche

1. Heizungsmodul (1) für eine Heißgetränkemaschine oder einen Heißgetränkeautomaten, insbesondere einen Kaffeevollautomat, zumindest umfassend eine Pumpe (2) zur Förderung des Wassers, eine Heizung (3) zur Erwärmung des Wassers und ein Leitungssystem zum Verbinden der Pumpe (2) und der Heizung (3) mit einer Frischwasserzufuhr (4) einerseits und einem Heißwasserauslass (5) andererseits, **dadurch gekennzeichnet, dass** das Heizungsmodul (1) aus zwei zu einer kassettenartigen Einheit zusammensetzbaren Halbschalen (6a, 6b) besteht, die in einer zusammengesetzten Lage einen ersten Hohlraum (7) für ein Heizelement (3), und einen zweiten Hohlraum (8) als Fluidkammer oder -kanal aufweisen, wobei die Pumpe (2) eingangsseitig an die Frischwasserzufuhr (4) und ausgangsseitig (bei 12) mit einem Eingang (19) des ersten Hohlraumes (7) verbunden ist, wobei der erste Hohlraum (7) einen ersten Ausgang (13) aufweist, der einen Auslauf (5) für erhitztes Wasser bildet, und nahe des ersten Ausgangs (13) einen zweiten Ausgang (14) aufweist, der durch ein Ventil (15) gesteuert mit einem Einlass (16) des zweiten Hohlraumes (8) verbunden ist, wobei der zweite Hohlraum (8) einen Auslass (18) zur Abgabe durch das Ventil (15) zugeführten, überschüssigen Wassers oder Kondensat aufweist.

2. Heizungsmodul (1) nach Anspruch 1, **dadurch gekennzeichnet, dass** die zusammensetzbaren Halbschalen (6a, 6b) in der zusammengesetzten Lage einen dritten Hohlraum (9) als Frischwasserzulaufkammer aufweisen, wobei die Pumpe (2) eingangsseitig (bei 10) mit einem Ausgang (11) des dritten Hohlraumes (9) und ausgangsseitig (bei 12) mit dem Eingang (19) des ersten Hohlraumes (7) verbunden ist, wobei der dritte Hohlraum (9) den Einlass (17) zur Frischwasserzufuhr (4) aufweist.

3. Heizungsmodul nach Anspruch 1 oder 2, **dadurch gekennzeichnet, dass** die Pumpe (2) auf der Außenseite der ersten Halbschale (6a) angeordnet oder befestigt ist.

4. Heizungsmodul (1) nach einem der Ansprüche 1 bis 3, **dadurch gekennzeichnet, dass** der zweite Hohlraum (8) eine Expansions- und /oder Kondensationskammer bildet.

5. Heizungsmodul (1) nach einem der Ansprüche 1 bis 4, **dadurch gekennzeichnet, dass** die kassettenartigen Halbschalen (6a,6b) des Heizungsmoduls (1) eine quaderartige Form aufweisen und alle Hohlräume (7,8,9) etwa parallel zu den Längsseiten verlaufend angeordnet sind, wobei die Einlässe (16,17,18) der Hohlräume (7,8,9) nahe einer ersten Querseite und die Auslässe (11,13,14,18) nahe der jeweils gegenüberliegenden Querseite der Rechteckform angeordnet sind.

6. Heizungsmodul (1) nach einem der Ansprüche 2 bis 5, **dadurch gekennzeichnet, dass** nahe am oder innerhalb des dritten Hohlraumes (9), vorzugsweise in einer nahe des Eingangs (17) des dritten Hohlraumes (9) angeordneten Kammer (20), ein Durchflussmengenmesser (21) angeordnet ist.

7. Heizungsmodul (1) nach Anspruch 6, **dadurch gekennzeichnet, dass** der Durchflussmengenmesser (21) durch einen Ultraschall-Durchflussmengenmesser oder einen Drucksensor- Durchflussmengenmesser gebildet ist.

8. Heizungsmodul (1) nach einem der Ansprüche 1 bis 7, **dadurch gekennzeichnet, dass** an oder auf der ersten kassettenartigen Halbschale (6a) eine Platine (22) mit einer Auswerte- und Ansteuerungselektronik zur Steuerung und / oder Auswertung von elektrischen Signalen zumindest der Pumpe (2) und / oder Heizung (3) angeordnet ist.

9. Heizungsmodul (1) nach Anspruch 8, **dadurch gekennzeichnet, dass** die Platine (22) auf einem Kühlkörper (23) angeordnet ist, der von der ersten kassettenartigen Halbschale (6a) nach außen abragt und mit einem Teilbereich die Wandung der ersten kassettenartigen Halbschale (6a) durchgreift und innerhalb des dritten Hohlraumes (9) liegt und dort vom Frischwasser umströmbar ist.

10. Heizungsmodul (1) nach einem der Ansprüche 1 bis 9, **dadurch gekennzeichnet, dass** die Pumpe (2) zur Förderung des Wassers durch eine Schwingkolbenpumpe oder eine Rotationskolbenpumpe, gegebenenfalls mit daran oder darin angeordnetem Druckspeicher zur Kompensation von Druckspitzen, gebildet ist.

11. Heizungsmodul (1) nach einem der Ansprüche 1 bis 10, **dadurch gekennzeichnet, dass** das Heizelement (3) aus einem von Frischwasser durchströmten oder umströmten induktiv erhitztem Element, Rohrheizkörper, Infrarotstrahler oder einer Heizpatrone besteht.

12. Heizungsmodul (1) nach einem der Ansprüche 2 bis 11, **dadurch gekennzeichnet, dass** die Pumpe (2) mit einem ersten Schlauchabschnitt (24) eingangsseitig (bei 10) mit dem Ausgang (11) des dritten Hohlraumes (9) und ausgangsseitig (bei 12) mittels eines zweiten Schlauchabschnitts (25) mit dem Eingang (19) des ersten Hohlraumes (7) verbunden ist.

13. Heizungsmodul (1) nach einem der Ansprüche 1 bis 12, **dadurch gekennzeichnet, dass** zwischen Pumpenausgang (12) und Heizungseingang (bei 19) ein Überdruckventil (26) eingeschaltet ist, das einen Abführanschluss (27) aufweist, der beispielsweise mittels eines weiteren Schlauchabschnitts (28) mit einem Auffangbehälter verbunden ist.

14. Heizungsmodul (1) nach einem der Ansprüche 1 bis 13, **dadurch gekennzeichnet, dass** im Verlauf des Wasserflusses, insbesondere am Heizungseingang (bei 17), mindestens ein Temperatursensor (29) zur Erfassung der Frischwassertemperatur und am Heizungsausgang (bei 13) ein Temperatursensor (30) zur Erfassung der Heißwassertemperatur angeordnet ist.

15. Heizungsmodul (1) nach einem der Ansprüche 8 bis 14, **dadurch gekennzeichnet, dass** das Ventil (15) zwischen dem Eingang (16) des zweiten Hohlraumes (8) und dem zweiten Ausgang (14) des ersten Hohlraumes (7) elektronisch steuerbar ist, wobei die Steuerung durch die auf der Platine (22) angeordnete Steuerungs- und Auswerteelektronik nach Beendigung der Getränkeerzeugung erfolgt.

16. Heizungsmodul (1) nach einem der Ansprüche 1 bis 15, **dadurch gekennzeichnet, dass** die quaderartigen Halbschalen (6a, 6b) druckdicht miteinander verbunden oder verbindbar sind, beispielsweise mittels Verkleben, Verschweißen, insbesondere Reibverschweißen, oder Verschrauben, wobei beim Verschrauben ein Dichtmittel zwischen den Halbschalen (6a, 6b) angeordnet ist.

17. Heizungsmodul (1) nach einem der Ansprüche 1 bis 16, **dadurch gekennzeichnet, dass** die Hohlräume (7,8,9) durch an einer oder an beiden Halbschalen (6a, 6b) deckungsgleiche Vertiefungen oder Ausnehmungen gebildet sind, wobei die Hohlräume (7,8,9) nach dem Verbinden der Halbschalen (6a,6b) fluiddicht sind.

18. Heizungsmodul (1) nach einem der Ansprüche 1 bis 17, **dadurch gekennzeichnet, dass** das in dem ersten Hohlraum (7) angeordnete Heizelement (3) am jeweiligen stirnseitigen Ende Anschlusselemente (31,32) aufweist, die gegenüber dem ersten Hohlraum (7) abgedichtet aus dem Hohlraum (7) heraus die Halbschalen (6a, 6b) nach außen durchgreifen.

## Claims

1. A heating module (1) for a hot drink machine or an automatic hot drink device, in particular a fully automatic coffee machine, at least comprising a pump (2) for conveying the water, a heater (3) for heating the water and a piping system for connecting the pump (2) and the heater (3) with a fresh water supply (4) on one hand and a hot water outlet (5) on the other hand, **characterized in that** the heating module (1) has two cassette-like half-shells (6a, 6b) that can be assembled and that in an assembled condition comprise a first cavity (7) for a heating member (3) and a second cavity (8) as a fluid chamber or passage, the pump (2) being connected at the entry side to the fresh water supply (4) and at the exit side (at 12) to an inlet (19) of the first cavity (7), the first cavity (7) comprising a first outlet (13) forming a discharge (5) for heated water, and comprising close to the first outlet (13) a second outlet (14) that is controlled by a valve (15) and connected with an inlet (16) of the second cavity (8), the second cavity (8) comprising an outlet (18) for discharging the excess water or condensate supplied through the valve (15).

2. The heating module (1) according to claim 1, **characterized in that** the half-shells (6a, 6b) that can be assembled comprise in the assembled condition a third cavity (9) as a fresh water supply chamber, the pump (2) being connected at the entry side (at 10) to an outlet (11) of the third cavity (9) and at the exit side (at 12) to the inlet (19) of the first cavity (7), the third cavity (9) comprising the inlet (17) for the fresh water supply (4).

3. The heating module according to claim 1 or 2, **characterized in that** the pump (2) is arranged or attached on the outside of the first half-shell (6a).

4. The heating module (1) according to one of claims 1 to 3, **characterized in that** the second cavity (8) forms an expansion and/or condensation chamber.

5. The heating module (1) according to one of claims 1 to 4, **characterized in that** the cassette-like half-shells (6a, 6b) of the heating module (1) have a parallelepiped shape and all cavities (7, 8, 9) are approximately in parallel to the longitudinal sides, the inlets (16, 17, 18) of the cavities (7, 8, 9) being situated close to a first transverse side and the outlets (11, 13, 14, 18) being situated close to the respectively opposite transverse side of the rectangular shape.

6. The heating module (1) according to one of claims 2 to 5, **characterized in that** close to or within the third cavity (9), preferably in a chamber (20) situated close to the inlet (17) of the third cavity (9), a flow meter (21) is arranged.

7. The heating module (1) according to claim 6, **characterized in that** the flow meter (21) is an ultrasonic flow meter or a pressure sensor flow meter.

8. The heating module (1) according to one of claims 1 to 7, **characterized in that** at or on the first cassette-like half-shell (6a), a printed-circuit board (22) with an electronic evaluation and control circuit for controlling and/or evaluating electrical signals at least of the pump (2) and/or the heater (3) is situated.

9. The heating module (1) according to claim 8, **characterized in that** the printed-circuit board (22) is situated on a cooling body (23) that projects from the first cassette-like half-shell (6a) toward outside and passes with a portion thereof through the wall of the first cassette-like half-shell (6a) and is located within the third cavity (9) and around which the fresh water can circulate.

10. The heating module (1) according to one of claims 1 to 9, **characterized in that** the pump (2) for supplying the water is an oscillating piston pump or a rotating piston pump, if applicable with a pressure accumulator arranged thereat or therein for compensating pressure peaks.

11. The heating module (1) according to one of claims 1 to 10, **characterized in that** the heating member (3) has an inductively heated member, a tubular heating element, an infrared radiator or a heating cartridge, through which or around which fresh water circulates.

12. The heating module (1) according to one of claims 2 to 11, **characterized in that** the pump (2) is connected with a first hose section (24) at the entry side (at 10) with the outlet (11) of the third cavity (9) and at the exit side (at 12) by means of a second hose section (25) with the inlet (19) of the first cavity (7).

13. The heating module (1) according to one of claims 1 to 12, **characterized in that** between pump exit (12) and heater entry (at 19), a pressure relief valve (26) is connected that comprises a discharge connection (27) that is connected for example by means of another hose section (28) with a collecting container.

14. The heating module (1) according to one of claims 1 to 13, **characterized in that** in the course of the water flow, in particular at the heater entry (at 17), at least one temperature sensor (29) for detecting the fresh water temperature is situated and at the heater exit (at 13) a temperature sensor (30) for detecting the hot water temperature is situated.

15. The heating module (1) according to one of claims 8 to 14, **characterized in that** the valve (15) between the inlet (16) of the second cavity (8) and the second outlet (14) of the first cavity (7) is electronically controllable, the control being performed by the electronic evaluation and control circuit situated on the printed-circuit board (22) after completion of the hot beverage production.

16. The heating module (1) according to one of claims 1 to 15, **characterized in that** the parallelepiped half-shells (6a, 6b) are connected or can be connected with each other in a pressure-tight manner, for instance by gluing, welding, in particular by rotary friction, or screwing, and when screwing a sealing agent being applied between the half-shells (6a, 6b).

17. The heating module (1) according to one of claims 1 to 16, **characterized in that** the cavities (7, 8, 9) are formed by congruent indentations or recesses at one or both half-shells (6a, 6b), the cavities (7, 8, 9) being fluid-tight after connecting the half-shells (6a, 6b).

18. The heating module (1) according to one of claims 1 to 17, **characterized in that** at the respective front-side end, the heating member (3) situated in the first cavity (7) has connecting elements (31, 32) that are sealed against the first cavity (7) and pass out of the cavity (7) through the half-shells (6a, 6b) toward outside.

## Revendications

1. Module de chauffage (1) pour une machine de boissons chaudes ou un automate de boissons chaudes, en particulier une machine à café totalement automatique, au moins comprenant une pompe (2) à propulser l'eau, un élément de chauffage (3) à chauffer l'eau et un système de tuyauterie à lier la pompe (2) et l'élément de chauffage (3) à une alimentation d'eau fraîche (4) d'un côté et une sortie d'eau chaude (5) de l'autre côté, **caractérisé en ce que** le module de chauffage (1) comprend deux demi-coques (6a, 6b) de type cassette qui peuvent être assemblées et qui dans la condition assemblée comprennent une première cavité (7) pour un élément de chauffage (3), et une deuxième cavité (8) comme chambre ou canal de fluide, la pompe (2) étant liée du côté d'entrée à l'alimentation d'eau fraîche (4) et du côté de sortie (à 12) à une entrée (19) de la première cavité (7), la première cavité (7) comprenant une première sortie (13) formant une sortie (5) pour l'eau chauffée, et comprenant près de la première sortie (13) une deuxième sortie (14) qui est commandée par une soupape (15) et liée à une entrée (16) de la deuxième cavité (8), la deuxième cavité (8) comprenant une sortie (18) destinée à délivrer l'eau ou le condensat excessif alimenté par la soupape (15).

2. Module de chauffage (1) selon la revendication 1, **caractérisé en ce que** les demi-coques (6a, 6b) qui peuvent être assemblées comprennent dans la condition assemblée une troisième cavité (9) comme chambre d'alimentation d'eau fraîche, la pompe (2) étant liée du côté d'entrée (à 10) à une sortie (11) de la troisième cavité (9) et du côté de sortie (à 12) à l'entrée (19) de la première cavité (7), la troisième cavité (9) comprenant l'entrée (17) pour l'alimentation d'eau fraîche (4).

3. Module de chauffage selon la revendication 1 ou 2, **caractérisé en ce que** la pompe (2) est disposée ou attachée à la surface extérieure de la première demi-coque (6a).

4. Module de chauffage (1) selon une des revendications 1 à 3, **caractérisé en ce que** la deuxième cavité (8) forme une chambre d'expansion et/ou de condensation.

5. Module de chauffage (1) selon une des revendications 1 à 4, **caractérisé en ce que** les demi-coques (6a, 6b) de type cassette du module de chauffage (1) ont une forme parallélépipédique et toutes les cavités (7, 8, 9) sont environ parallèles aux côtés longitudinaux, les entrées (16, 17, 18) des cavités (7, 8, 9) étant disposées près d'un premier côté transversal et les sorties (11, 13, 14, 18) étant disposées près du côté transversal respectivement opposé de la forme rectangulaire.

6. Module de chauffage (1) selon une des revendications 2 à 5, **caractérisé en ce que** près de ou au-dedans de la troisième cavité (9), de préférence dans une chambre (20) disposée près de l'entrée (17) de la troisième cavité (9), un débitmètre (21) est disposé.

7. Module de chauffage (1) selon la revendication 6, **caractérisé en ce que** le débitmètre (21) est un débitmètre par ultrasons ou un débitmètre à capteur de pression.

8. Module de chauffage (1) selon une des revendications 1 à 7, **caractérisé en ce qu**'à ou sur la première demi-coque (6a) de type cassette, une carte imprimée (22) avec un circuit électronique d'évaluation et de commande à commander et/ou évaluer des signaux électriques au moins de la pompe (2) et/ou de l'élément de chauffage (3) est disposé.

9. Module de chauffage (1) selon la revendication 8, **caractérisé en ce que** la carte imprimée (22) est disposée sur un corps de refroidissement (23) qui fait saillie de la première demi-coque (6a) de type cassette vers l'extérieur et passe avec une partie de celle-ci à travers la paroi de la première demi-coque (6a) de type cassette et se trouve au-dedans de la troisième cavité (9) et autour duquel peut circuler l'eau fraîche.

10. Module de chauffage (1) selon une des revendications 1 à 9, **caractérisé en ce que** la pompe (2) à alimenter l'eau est une pompe à piston oscillant ou une pompe à piston rotatif, le cas échéant avec un accumulateur de pression disposé à celle-ci ou dans celle-ci à compenser des pointes de pression.

11. Module de chauffage (1) selon une des revendications 1 à 10, **caractérisé en ce que** l'élément de chauffage (3) comprend un élément inductivement chauffé, un élément de chauffage tubulaire, un radiateur infrarouge ou une cartouche de chauffage, à travers lesquels ou autour desquels l'eau fraîche circule.

12. Module de chauffage (1) selon une des revendications 2 à 11, **caractérisé en ce que** la pompe (2) est liée à une première section de tuyau (24) du côté d'entrée (à 10) à la sortie (11) de la troisième cavité (9) et du côté de sortie (à 12) au moyen d'une deuxième section de tuyau (25) à l'entrée (19) de la première cavité (7).

13. Module de chauffage (1) selon une des revendications 1 à 12, **caractérisé en ce qu**'entre la sortie (12) de la pompe et l'entrée (à 19) de l'élément de chauffage, une soupape de surpression (26) est disposée qui comprend un raccord d'évacuation (27) qui est lié par exemple au moyen d'une autre section de tuyau (28) à un récipient collecteur.

14. Module de chauffage (1) selon une des revendications 1 à 13, **caractérisé en ce que** sur le chemin du débit d'eau, en particulier à l'entrée de l'élément chauffant (à 17), au moins un capteur de température (29) à détecter la température de l'eau fraîche est disposé et à la sortie de l'élément chauffant (à 13) un capteur de température (30) à détecter la température de l'eau chaude est disposé.

15. Module de chauffage (1) selon une des revendications 8 à 14, **caractérisé en ce que** la soupape (15) entre l'entrée (16) de la deuxième cavité (8) et la deuxième sortie (14) de la première cavité (7) peut être commandée électroniquement, la commande se faisant par le circuit électronique d'évaluation et de commande disposé sur la carte imprimée (22) après l'achèvement de la production de la boisson chaude.

16. Module de chauffage (1) selon une des revendications 1 à 15, **caractérisé en ce que** les demi-coques (6a, 6b) parallélépipédiques sont liées ou peuvent être liées l'une à l'autre d'une manière étanche à la pression, par exemple par collage, par soudure, en particulier par soudure par friction, ou vissage, dans le cas du vissage un agent d'étanchéité étant appliqué entre les demi-coques (6a, 6b).

17. Module de chauffage (1) selon une des revendications 1 à 16, **caractérisé en ce que** les cavités (7, 8, 9) sont réalisées par des évidements ou enfoncements coïncidents à une ou aux deux demi-coques (6a, 6b), les cavités (7, 8, 9) étant étanches au fluide après la liaison des demi-coques (6a, 6b).

18. Module de chauffage (1) selon une des revendications 1 à 17, **caractérisé en ce qu**'à l'extrémité respectivement frontale, l'élément de chauffage (3) disposé dans la première cavité (7) comprend des éléments de raccord (31, 32) qui sont étanchés par rapport à la première cavité (7) et passent hors de la cavité (7) à travers les demi-coques (6a, 6b) vers l'extérieur.
